# EUROPEAN PATENT APPLICATION

(11) **EP 0 752 262 A1**
(43) Date of publication of application: **08.01.1997**
(21) Application number: 96110706.7
(22) Date of filing: 03.07.1996
(51) Int. Cl.: B01D 46/24

(54) **Filter drainage layer attachment**

(30) Priority: 07.07.1995 US 499478; 04.04.1996 US 499632
(71) Applicant: Flair Corporation, Ocala, Florida 34474-4799 (US)
(72) Inventor: Pruette, Dean, Marc, Blacksburg, Virginia 24060 (US); Thomas, Allan, Bradford, Charlotte, North Carolina 28200 (US)
(74) Representative: Wilhelm & Dauster Patentanwälte European Patent Attorneys

(57) **Abstract**

A filter system utilizing a coalescing-type filter element with at least one end cap such that contaminants are filtered from a gas stream, coalesced and drained from the filter element completely exterior to any other component of the filter element. The filter element includes a drainage sleeve which may extend over and exterior to at least one end cap. The filter element may include a transport layer disposed exterior to a drainage layer extending between end caps. The present invention further includes a method for decontaminating a gas stream utilizing the filter system and filter element.

## Description

### BACKGROUND

The present invention generally relates to the filtration of a contaminated gas stream. More particularly, the present invention is directed toward a filter system utilizing a modular filter element having a coalescing section which filters out and coalesces contaminants from a gas stream in order that the contaminants may drain from the filter.

To decontaminate a gas stream, conventional filter systems utilize a filter element having an end cap positioned so that drainage of the coalesced contaminants occurs either through the end cap or along an outside edge of the end cap.

A particular filter element currently in use includes an end cap chemically bonded to the element and having a portion located exterior to all of the remaining elements within the end cap. In this arrangement, contaminants coalesce and drain from the gas stream. Through gravity, the coalesced contaminants drip into the end cap. When enough contaminants drip into the end cap, eventually the contaminants will spill over and drip down the exterior of the end cap portion.

Deficiencies exist with this conventional arrangement. One deficiency is that the contaminants create a slick and messy surface on the end cap, hampering replacement of the filter element. Without a non-slick surface, removing such a filter element from a filter system is made more difficult.

Another conventional arrangement includes a filter element having an end cap with a plurality of slots provided therein to allow for drainage of coalesced contaminants through a lower surface of the end cap. An example of such an arrangement may be found in United Kingdom Patent Application 2,261,830.

Deficiencies exist in this arrangement. The end cap described in UK Patent Application 2,261,830 must be formed with greater lateral dimensions, which makes manufacture of the filter element more expensive and may interfere with the close tolerances required in conventional filter system vessels.

### SUMMARY

The present invention alleviates the aforementioned deficiencies found in the prior art by providing a filter element of inexpensive construction which provides a drainage pathway exterior to an end cap without causing a slick and messy surface on the end cap.

The present invention is directed to a filter system utilizing a cylindrical filter element with a filter medium for filtering out contaminants from a gas stream. Such a system may include a filter tank, an intake pipe, an outlet pipe and a filter vessel within which a filter element is positioned. The filter element is used within the system in such a way as to allow for easy removal of the filter element for replacement or cleaning.

The filter element of the present invention includes, along with the filter medium, a filter drainage sleeve positioned outwardly from the medium. Furthermore, the filter element may include end caps on either end of the element, with at least one end cap having an outer circumference with an outwardly facing surface. Also, the drainage sleeve may be positioned such that it extends outwardly of at least one end cap. In addition, the filter element of the present invention may include means for attaching the drainage sleeve to the end cap at which drainage of the contaminants takes place, hereinafter called the bottom cap.

The filter element may further include an exteriorly positioned transport layer which overlays a drainage sleeve that extends up to but not over the end caps. The transport layer extends down over and outside the end caps.

The filter element of the present invention also may incorporate a porous inner core located interior to the filter medium. Alternatively, or in addition, the filter element may include a porous outer core positioned between the filter medium and the filter drainage sleeve.

The present invention is further directed to a method of filtering a contaminated gas stream. This method includes the introduction of a gas stream into a filter system, passing the gas stream into a core of a tubular filter element and allowing the gas stream to pass into a coalescing section of the filter element. In this manner, the gas stream is purified by separating the contaminants from the gas Stream and coalescing them within the coalescing section. The method may further provide for the elimination of the contaminants from the filter elements by allowing the contaminants to drip from the lower outer most portion of the filter element into the filter system vessel, which includes a drain for draining out the contaminants.

An object of the present invention is to provide a filter system utilizing a coalescing-type filter element. Such a system may include a filter tank, an intake pipe, an outlet pipe and a filter vessel within which such a filter element is positioned. The coalescing-type filter element is constructed to filter contaminants from a gas stream entering the system and remove the contaminants through a filter drainage sleeve or a transport layer positioned such that at least its lower portion is exterior to an end cap positioned there.

It is a further object of the present invention to provide means for attaching the filter drainage sleeve to at least one end cap on the filter element.

It is a further object of the present invention to provide a porous inner core which provides support to the filter element as well as assists in the filtering of the contaminated gas stream. Additionally, it is an object of the present invention to provide a porous outer core which provides enhanced support to the filter element as well as assists in the filtration of the gas stream.

It is a further object of the present invention to provide a method for filtering out a contaminated gas stream utilizing the above-described filter system and filter element.

### BRIEF DESCRIPTION OF THE DRAWINGS

FIG. 1 is a partial cross-sectional view of a preferred embodiment of a filter system according to a preferred embodiment of the present invention;
FIG. 2 is a cross-sectional view of the filter element of the system of FIG. 1;
FIG. 3 is a view of the bottom of the filter element of FIG. 1; and
FIG. 4 is a cross-sectional view of another preferred embodiment of the filter element according to the present invention.

### DETAILED DESCRIPTION OF THE PREFERRED EMBODIMENTS

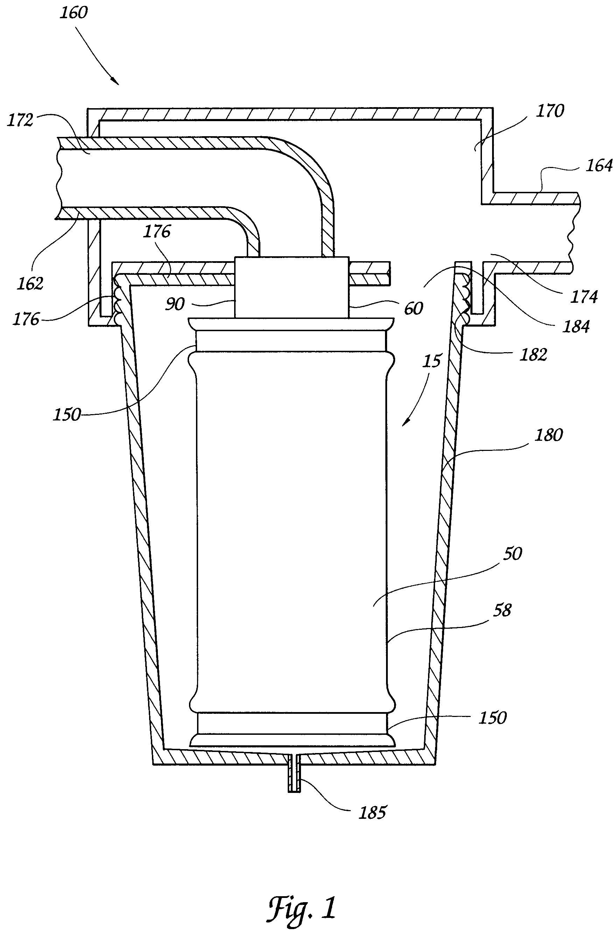

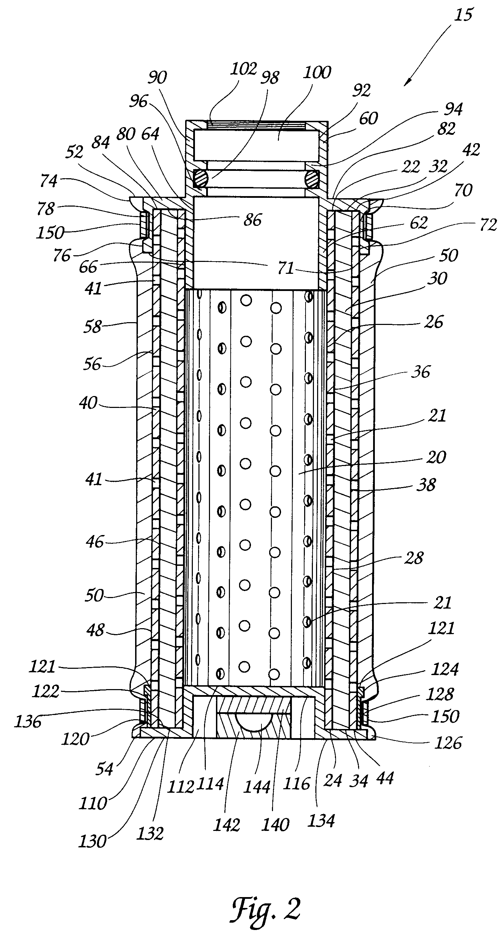

Referring now to the drawings, where like numerals denote like elements, FIG. 1 shows a preferred embodiment of a filter element 15 within filter system 160. As shown in FIG. 1, filter element 15 includes a top cap 60. Top cap 60 has a top cap stem 90. Further included in filter element 15 is a filter drainage layer 50, made of a material which allows the flow of contaminants therethrough, such as polyester or other suitable materials. Drainage layer 50 has an outside surface 58. Also shown in FIG. 1 are two constriction bands 150 which may be utilized for attaching the drainage layer 50 to the top cap 60 and a bottom cap 110 (FIG. 2). Although constriction bands 150 are shown for attaching drainage layer 50 to top and bottom caps 60, 110, the present invention is not so limited. It is to be noted that any suitable mechanical bond or clamping mechanism may be utilized in lieu of constriction bands 150. Furthermore, it is to be noted that a chemical bond may be used in addition to or in lieu of constriction bands 150 or other suitable mechanical bond. The chemical bond may be any suitable adhesive composition, including epoxy, resin and glue.

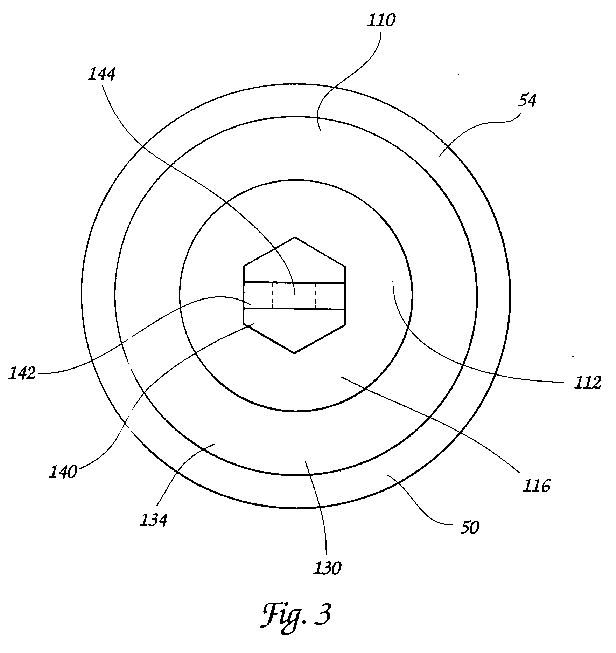

FIG. 3 is a bottom view of a preferred embodiment of the bottom end cap 110. Bottom end cap 110 is completely encircled by drainage sleeve 50 and includes a bottom cap portion 130 and a bottom cap well 112. Bottom cap portion 130 has a lower surface 134. A drainage sleeve bottom end 54 is roughly within the same plane as bottom cap portion lower surface 134, which can be better seen in FIG. 2.

With reference to FIGS. 2, 3, bottom cap well 112 includes an upper surface 114 and a lower surface 116. Within bottom cap well 112 may be positioned a bottom cap nut 140 which may include a bottom cap ring 142. The bottom cap ring 142 includes an aperture 144. Bottom cap ring 142 is so placed within bottom cap well 112 for easy removal of the filter element 15 from a filter system. Although bottom cap nut 140 is shown to be hexagonal in FIG. 3, the present invention is not so limited. The present invention envisions any suitable means that would allow for easy removal and replacement of filter element 15.

Next will be described the configuration of a preferred embodiment of filter element 15. In addition to top cap 60, bottom cap 110 and filter drainage sleeve 50, all discussed above, filter element 15 further includes a filter medium 30 located interior to drainage sleeve 50. Additionally, filter element 15 may include a porous inner core 20 or a porous outer core 40 or both. The cores 20, 40 both provide support to the filter element 15 as well as assist in filtering out contaminants from a gas stream. Inner core 20 has pores 21 and outer core 40 has pores 41. Both cores 20, 40 may be composed of a perforated material, such as perforated metal. Alternatively, the cores 20, 40 may be composed of a mesh-like material. Such a mesh-like material may be composed of any suitable material which would lend support to the filter element 15, such as reinforced plastic mesh and wire mesh.

As shown in FIG. 2, the outer core 40, the filter medium 30 and the inner core 20 each have, respectively, top ends 42, 32, 22. Furthermore, the bottom ends of outer core 40, filter medium 30 and inner core 20 each have, respectively, bottom ends 44, 34, 24. Ends 22, 32, 42 are all substantially within the same plane and are adapted to receive a surface of top cap 60. Likewise, bottom ends 24, 34, 44 are all substantially within the same plane and are adapted to receive a surface of bottom cap 110. Inner core 20 further includes an inside surface 26 and an outside surface 28. The inside surface 26 of inner core 20 is adjacent to and may abut a surface of top cap 60 as well as a surface of bottom cap 110. Outside surface 28 of inner core 20 faces inside surface 36 of filter medium 30. Outer core 40 further has an inside surface 46 which faces outside surface 38 of filter medium 30. In addition, outer core 40 has an outside surface 48 which faces drainage layer inside surface 56.

Next will be described in greater detail a preferred embodiment of top cap 60, as shown in FIG. 2. Top cap 60 includes a stem 90 and may include an inner projection 62 and an outer projection 70. Inner projection 62 includes an inside surface 64 and an outside surface 66. Outside surface 66 faces inner core inside surface 26. Top cap outer projection 70 further includes a lower surface 71, an inside surface 72 and an outside surface 78. Inside surface 72 faces outer core outside surface 48. Top cap outer projection outside surface 78 may further include an upper lip 74 and a lower lip 76.

Top cap portion 80 is located in a plane roughly perpendicular to projections 62, 70. Portion 80 includes an upper surface 82 and a lower surface 84. Lower surface 84 abuts top ends 22, 32, 42 of inner core 20, filter medium 30 and outer core 40. Lower surface 84 may further include surface ridges 86. Ridges 86 may enhance attachment of surface 84 of top cap 60 to top ends 22, 32, 42 through a chemical bond, such as epoxy, resin or glue applied thereon. Surface 82 of top cap portion 80 is roughly within the same plane as a filter drainage sleeve top end 52 of drainage sleeve 50.

Located throughout end cap 60 and contiguous with top cap inside surface 92 is an intake 100. As shown in FIG. 3, a threaded intake opening 102 is located at the uppermost portion of top cap 60 and may be used to connect the filter element 15 to an intake pipe 162 of filter system 160 (described in greater detail below).

Next will be described in further detail a preferred embodiment of bottom cap 110, as shown in FIG. 2. Bottom cap portion 130 includes a lower surface 134 and an upper surface 132. Upper surface 132 abuts against bottom ends 24, 34, 44 of inner core 20, filter medium 30, and outer core 40, respectively. Upper surface 132 may further include ridges 136 which function similarly to top cap lower surface ridges 86 described above.

Bottom cap 110 may further include an outer projection 120. Outer projection 120 includes an upper surface 121 and an inside surface 122, which faces outer core outside surface 48. Outer projection 120 also includes an outside surface 128, which faces filter drainage sleeve inside surface 56. Outside surface 128 may further include an upper lip 124 and a lower lip 126. Finally, bottom cap 110 includes bottom cap well upper surface 114. This well upper surface 114 prevents the gas stream that flows into filter element 15 through intake 100 from flowing out of filter element 15 through bottom cap 110.

As shown in FIG. 2, constriction bands 150 may be positioned exterior to outer projection outside surfaces 78, 128, crimping filter drainage sleeve 50 therebetween. As can be seen, upper and lower lips 74, 76 on outside surface 78 may create minor protuberances in the drainage sleeve 50. Similarly protuberances may be formed if upper and lower lips 124, 126 are incorporated on outside surface 128. Although FIG. 2 depicts the use of constriction bands 150, as noted above, any other suitable mechanical bond may be used in lieu of constriction bands 150. Furthermore, a chemical bond may be used either with or in lieu of the mechanical bonds for attaching drainage sleeve 50 to top cap 60 and/or bottom cap 110.

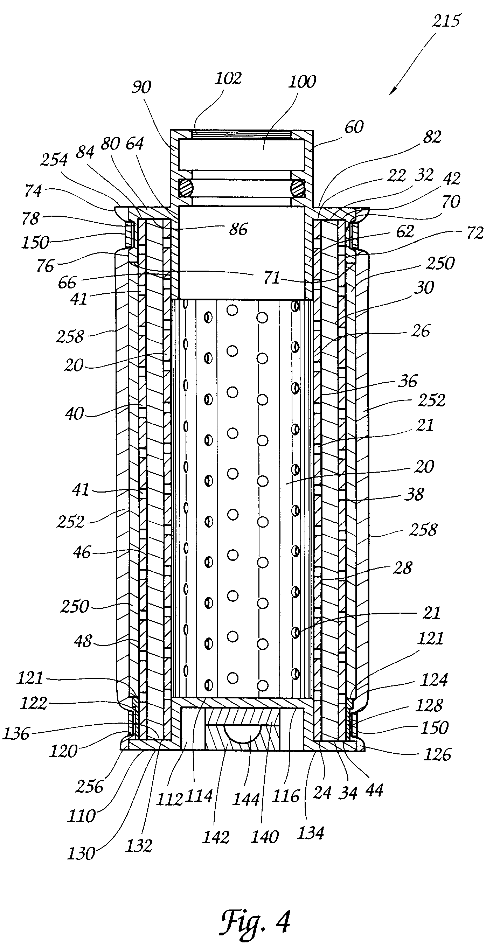

Next will be described another preferred embodiment of a filter element. As shown in FIG. 4, filter element 215 is of similar construction to filter element 15. Filter element drainage sleeve 250 is disposed outwardly from outer core 40. Drainage sleeve 250 extends along the length of outer core 40 like drainage sleeve 50. Unlike drainage sleeve 50, sleeve 250 stops short of top cap outer projection lower surface 71 and bottom cap outer projection upper surface 121. Alternatively, drainage sleeve 250 may terminate by abutting top cap outer projection lower surface 71 and bottom cap outer projection upper surface 121.

Further included in filter element 215 is a transport layer 252, having an outer surface 258, a top end 254 and a bottom end 256. Transport layer 252 is formed of a material allowing contaminants to travel therethrough and may be formed of the same or similar material as drainage sleeves 50, 250. As shown in FIG. 4, transport layer 252 is disposed exterior to drainage sleeve 250. Transport layer 252 extends the length of outer core 40 and terminates with its top end 254 roughly in the same plane as top cap portion upper surface 82 and its bottom end 256 roughly in the same plane as bottom cap portion lower surface 134.

Transport layer 252 may be attached to caps 60, 110 by way of mechanical and/or chemical bonds, as discussed above in regard to drainage sleeve 50 of filter element 15. Specifically, constriction bands 150, or another suitable mechanical bond, may be used to attach transport layer 252 to caps 60, 110. Alternatively, any suitable chemical bond, such as epoxy, resin or glue, may be used, alone or in concert with a mechanical bond, to attach transport layer 252 to caps 60, 110.

Drainage sleeve 50, transport layer 252 and constriction bands 150 may be colorized so as to provide color coding for specific sizes and types of filter elements 15, 215. Further, drainage sleeve 50, transport layer 252 and constriction bands 150 may be formed of a material capable of receiving a marking, such marking to identify the filter element 15, 215 by product number, company name and/or by trademark, logo or the like.

FIG. 1 shows a preferred embodiment of a filter system 160 which utilizes a filter element 15. It is to be understood that filter element 215 may also be utilized within the filter system 160. Filter system 160 includes a filter system intake pipe 162, a filter system outlet pipe 164, a filter tank 170 and a filter vessel 180. Intake pipe 162 enters tank 170 at tank intake 172 and proceeds into filter element intake 100 (FIG. 2) of stem 90 within top cap 60. Filter system outlet pipe 164 exits from filter system 160 at filter tank outlet 174.

Filter vessel 180 is attachable to and removable from filter tank 170. Filter vessel 180 creates a seal 176 between itself and filter tank 170 when properly attached. The seal 176 prevents the escape of the gas stream from the filter system 160. Vessel 180 also includes an outlet 184 into tank 170 to allow the gas stream exiting filter element 15 to flow into outlet pipe 164. Vessel 180 further includes a vessel drain 185 located at a bottom portion of vessel 180. As can be seen in FIG. 1, the lowest portion of vessel 180 may slope downwardly toward vessel drain 185. The drain 185 is positioned in order to allow contaminants which are filtered out of the gas stream to exit the filter system 160.

Next will be described a method of filtering a contaminated gas stream through the filter element 15 as described above. Although the method is described with reference to filter element 15, it is to be understood that the method is equally applicable for use with filter element 215. With reference to FIGS. 1, 2, a filter element 15 is attached to a filter tank intake 172 of filter system 160. A gas stream passes into filter system 160 by way of intake pipe 162, which leads into filter tank intake 172. The gas stream, which is contaminated with various particulates, passes into filter element 15 through top cap 60. Specifically, the gas stream passes through the intake 100 and into inner core 20. Due to bottom cap well upper surface 114, the gas stream is prevented from passing out of filter element 15 through bottom cap 110. Instead, the contaminated gas stream is directed through pores 21 in inner core 20. The contaminated gas stream then passes into the outwardly situated filter medium 30. This filter medium is a coalescing type of medium. As the gas stream passes through filter medium 30, the particulates and other contaminants are separated out. As the particulates and other contaminants separate out, they coalesce within the filter medium 30.

While the gas stream continues its outward progression in filter element 15, the filtered out, coalesced contaminants are pulled by gravity downwardly in filter element 15. Thus, as the gas stream passes out of drainage sleeve 50, the coalesced contaminants continue an outward and downward migration into drainage sleeve 50. Once in drainage sleeve 50, the coalesced contaminants continue to move downwardly in drainage sleeve 50. Eventually, the coalesced contaminants will reach the filter drainage bottom end 54. The coalesced contaminants exit filter element 15 from the filter drainage bottom end 54. In this manner, the coalesced contaminants exit filter element 15 at a position exterior to bottom cap 110. Thus, bottom cap 110 does not itself become contaminated by the coalesced contaminants. The coalesced contaminants eventually exit the filter system 160 through filter vessel drain 185.

With reference to FIG. 4, as the gas stream passes outwardly from filter element 215, the contaminants coalesced in filter medium 30 travel outwardly and downwardly into drainage sleeve 250. From drainage sleeve 250, the contaminants progress outwardly into transport layer 252, which allows the contaminants to travel downwardly to exit filter element 215 at bottom and 256.

With reference to FIG. 1, as the gas stream exits filter drainage sleeve 50 of filter element 15, or transport layer 252 of filter element 215, it passes through filter vessel outlet 184 into filter tank 170. From there, the gas stream exits the filter system 160 through filter system outlet pipe 164.

The above description and drawings are merely illustrative of a preferred embodiment which achieves the objects, features and advantages of the present invention. It is not intended that the present invention be limited thereto. Any modification of the present invention which comes within the spirit and scope of the following claims is considered part of the present invention. For example, although the filter element is illustrated in preferred embodiments as having a drainage sleeve or a transport layer attached by a constriction band, other mechanical bonds and/or chemical bonds are considered within the scope of the present invention. Furthermore, positional descriptors such as "upper end cap" and "lower end cap" are to be understood in relation to the figures in which such elements appear. The present invention is not so limited to such positional descriptors. It is to be understood that the scope of the present invention encompasses all orientations wherein the present invention functions.

## Claims

1. A tubular filter element comprising:
a filter medium;
a filter drainage sleeve positioned exterior to said medium;
a first end cap having an outwardly facing circumferential surface and positioned at an end of the filter element, said first end cap outwardly facing circumferential surface located interior to said drainage sleeve; and
means for attaching said drainage sleeve to said first end cap.

2. The tubular filter element as recited in claim 1, wherein said means for attaching is a chemical bond.

3. The tubular filter element as recited in claim 1, wherein said means for attaching is a mechanical bond.

4. The tubular filter element as recited in claim 3, wherein said mechanical bond is a constriction band biasing said drainage sleeve to said outwardly facing circumferential surface of said first end cap.

5. The tubular filter element as recited in claim 1, further comprising:
a second end cap having an outwardly facing circumferential surface and positioned at an opposite end from said first end cap;
means for attaching said drainage sleeve to said second end cap; and
wherein one of said end caps has an intake opening.

6. The tubular filter element as recited in claim 1, further comprising a porous inner core positioned interior to said medium.

7. The tubular filter element as recited in claim 6, wherein said inner core is composed of mesh.

8. The tubular filter element as recited in claim 7, wherein said mesh is a wire mesh.

9. The tubular filter element as recited in claim 1, further comprising a porous outer core positioned between said medium and said drainage sleeve.

10. The tubular filter element as recited in claim 9, wherein said outer core is composed of mesh.

11. The tubular filter element as recited in claim 10, wherein said mesh is a wire mesh.

12. The tubular filter element as recited in claim 1, wherein said drainage sleeve is colorized and adapted to receive identifying markings.

13. A tubular filter element comprising:
a filter medium;
a filter drainage sleeve positioned exterior to said medium;
a transport layer positioned exterior to said drainage sleeve;
a first end cap positioned at an end of the filter element and having an outer projection with an outwardly facing circumferential surface and an abutment surface, said circumferential surface located interior to said transport layer, an end of said drainage sleeve located adjacent to said abutment surface; and
means for attaching said transport layer to said first end cap.

14. The tubular filter element as recited in claim 13, wherein said means for attaching is a chemical bond.

15. The tubular filter element as recited in claim 13, wherein said means for attaching is a mechanical bond.

16. The tubular filter element as recited in claim 15, wherein said mechanical bond is a constriction band biasing said transport layer to said outwardly facing circumferential surface of said first end cap.

17. The tubular filter element as recited in claim 13, further comprising:
a second end cap positioned at an opposite end from said first end cap and having an outwardly facing circumferential surface and an abutment surface;
means for attaching said transport layer to said second end cap;
wherein one of said end caps has an intake opening; and
wherein a second end of said drainage sleeve is located adjacent to said second end cap abutment surface.

18. The tubular filter element as recited in claim 13, further comprising a porous inner core positioned interior to said medium.

19. The tubular filter element as recited in claim 18, wherein said inner core is composed of mesh.

20. The tubular filter element as recited in claim 19, wherein said mesh is a wire mesh.

21. The tubular filter element as recited in claim 13, further comprising a porous outer core positioned between said medium and said drainage sleeve.

22. The tubular filter element as recited in claim 21, wherein said outer core is composed of mesh.

23. The tubular filter element as recited in claim 22, wherein said mesh is a wire mesh.

24. The tubular filter element as recited in claim 13, wherein said transport layer is colorized and adapted to receive identifying markings.

25. A tubular filter element comprising:
a porous inner core;
a filter medium positioned exterior to said inner core;
a porous outer core positioned exterior to said medium;
a filter drainage sleeve, said drainage sleeve positioned exterior to said outer core;
an upper and lower end cap, said end caps positioned at either end of said filter element, each said end cap having an outwardly facing circumferential surface positioned between said outer core and said drainage sleeve, said upper cap having an intake opening adjacent to said inner core, said lower cap having a replacement means for replacing the filter element; and
means for attaching said drainage sleeve to said end caps.

26. The tubular filter element as recited in claim 25, wherein said means for attaching said drainage sleeve to said end caps is a mechanical bond.

27. The tubular filter element as recited in claim 26, wherein said mechanical bond is a constriction band biasing said drainage sleeve to said outwardly facing circumferential surfaces of said end caps.

28. The tubular filter element as recited in claim 26, wherein said means for attaching said drainage sleeve to said end caps further includes a chemical bond.

29. A tubular filter element comprising:
a porous inner core;
a filter medium positioned exterior to said inner core;
a porous outer core positioned exterior to said medium;
a filter drainage sleeve, said drainage sleeve positioned exterior to said outer core and having two ends;
a transport layer positioned exterior to said drainage sleeve;
an upper and lower end cap, said end caps positioned at either end of said filter element, each said end cap having an outwardly facing circumferential surface positioned between said outer core and said transport layer and an abutment surface, each said end of said drainage sleeve located adjacent to a respective one of said abutment surfaces, said upper cap having an intake opening adjacent to said inner core, said lower cap having a replacement means for replacing the filter element; and
means for attaching said transport layer to said end caps.

30. The tubular filter element as recited in claim 29, wherein said means for attaching said transport layer to said end caps is a mechanical bond.

31. The tubular filter element as recited in claim 30, wherein said mechanical bond is a constriction band biasing said transport layer to said outwardly facing circumferential surfaces of said end caps.

32. The tubular filter element as recited in claim 30, wherein said means for attaching said drainage sleeve to said end caps further includes a chemical bond.

33. A filter system comprising:
a filtration tank;
an intake pipe entering said tank;
an outlet pipe exiting said tank;
a filtration vessel, said vessel attachable to and removable from said tank, said vessel further including a drain and an aperture opening into said tank; and
a tubular filter element comprising a filter medium, a filter drainage sleeve positioned exterior to said medium, at least one end cap, wherein one of said at least one end cap is positioned at an end of said filter element and has an intake opening adjacent to said filter medium and has an outwardly facing circumferential surface positioned between said medium and said drainage sleeve, and means for attaching said drainage sleeve to said one of said at least one end cap.

34. The filter system as recited in claim 33, wherein said means for attaching is a chemical bond.

35. The filter system as recited in claim 33, wherein said means for attaching is a mechanical bond.

36. The filter system as recited in claim 35, wherein said mechanical bond is a constriction band biasing said drainage sleeve to said outwardly facing circumferential surface of said one of said at least one end cap.

37. The filter system as recited in claim 33, wherein another of said at least one end cap has an outwardly facing circumferential surface and further comprising means for attaching said drainage sleeve to said another end cap.

38. The filter system as recited in claim 37, wherein said means for attaching is a mechanical bond.

39. The filter system as recited in claim 38, wherein said mechanical bond is a constriction band biasing said drainage sleeve to said outwardly facing circumferential surface of said another end cap.

40. The filter system as recited in claim 37, wherein said another end cap has a replacement means for replacing the filter element.

41. The filter system as recited in claim 40, wherein said replacement means comprises a ring.

42. The filter system as recited in claim 33, further comprising a porous inner core positioned interior to said medium.

43. The filter system as recited in claim 42, wherein said inner core is composed of mesh.

44. The filter system as recited in claim 43, wherein said mesh is a wire mesh.

45. The filter system as recited in claim 33, further comprising a porous outer core positioned between said medium and said drainage sleeve.

46. The filter system as recited in claim 45, wherein said outer core is composed of mesh.

47. The filter system as recited in claim 46, wherein said mesh is a wire mesh.

48. A filter system comprising:
a filtration tank;
an intake pipe entering said tank;
an outlet pipe exiting said tank;
a filtration vessel, said vessel attachable to and removable from said tank, said vessel further including a drain and an aperture opening into said tank; and
a tubular filter element comprising a filter medium, a filter drainage sleeve positioned exterior to said medium, a transport layer positioned exterior to said drainage sleeve, at least one end cap, wherein one of said at least one end cap is positioned at an end of said filter element and has an intake opening adjacent to said filter medium and has an outwardly facing circumferential surface positioned between said medium and said transport layer and an abutment surface located adjacent to an end of said dranage sleeve, and means for attaching said transport layer to said one of said at least one end cap.

49. The filter system as recited in claim 48, wherein said means for attaching is a chemical bond.

50. The filter system as recited in claim 48, wherein said means for attaching is a mechanical bond.

51. The filter system as recited in claim 50, wherein said mechanical bond is a constriction band biasing said transport layer to said outwardly facing circumferential surface of said one of said at least one end cap.

52. The filter system as recited in claim 48, wherein another of said at least one end cap has an outwardly facing circumferential surface and an abutment surface, a second end of said drainage layer located adjacent to said another end cap abutment surface, and further comprising means for attaching said transport layer to said another end cap.

53. The filter system as recited in claim 52, wherein said means for attaching is a mechanical bond.

54. The filter system as recited in claim 53, wherein said mechanical bond is a constriction band biasing said transport layer to said outwardly facing circumferential surface of said another end cap.

55. The filter system as recited in claim 52, wherein said another end cap has a replacement means for replacing the filter element.

56. The filter system as recited in claim 55, wherein said replacement means comprises a ring.

57. The filter system as recited in claim 48, further comprising a porous inner core positioned interior to said medium.

58. The filter system as recited in claim 57, wherein said inner core is composed of mesh.

59. The filter system as recited in claim 58, wherein said mesh is a wire mesh.

60. The filter system as recited in claim 58, further comprising a porous outer core positioned between said medium and said drainage sleeve.

61. The filter system as recited in claim 60, wherein said outer core is composed of mesh.

62. The filter system as recited in claim 61, wherein said mesh is a wire mesh.

63. A filter system comprising:
a filtration tank;
an intake pipe entering said tank;
an outlet pipe exiting said tank;
a filtration vessel, said vessel attachable to and removable from said tank, said vessel further including a drain and an aperture opening into said tank; and
a tubular filter element comprising a porous inner core, a filter medium positioned exterior to said inner core, a porous outer core positioned exterior to said medium, a filter drainage sleeve positioned exterior to said outer core, an upper and lower end cap each having an outwardly facing circumferential surface positioned between said outer core and said drainage sleeve, said end caps positioned at either end of said filter element, said upper cap having an intake opening adjacent to said inner core, and means for attaching said drainage sleeve to said end caps.

64. The filter system as recited in claim 63, wherein said means for attaching said drainage sleeve to said end caps is a mechanical bond.

65. The filter system as recited in claim 63, wherein said mechanical bond is constriction bands biasing said drainage sleeve to said outwardly facing circumferential surfaces of said end caps.

66. The filter system as recited in claim 64, wherein said means for attaching said drainage sleeve to said end caps further includes a chemical bond.

67. A filter system comprising:
a filtration tank;
an intake pipe entering said tank;
an outlet pipe exiting said tank;
a filtration vessel, said vessel attachable to and removable from said tank, said vessel further including a drain and an aperture opening into said tank; and
a tubular filter element comprising a porous inner core, a filter medium positioned exterior to said inner core, a porous outer core positioned exterior to said medium, a filter drainage sleeve positioned exterior to said outer core, a transport layer positioned exterior to said drainage sleeve, an upper and lower end cap each having an outwardly facing circumferential surface positioned between said outer core and said transport layer and an abutment surface located adjacent to an end of said drainage sleeve, said end caps positioned at either end of said filter element, said upper cap having an intake opening adjacent to said inner core, and means for attaching said transport layer to said end caps.

68. The filter system as recited in claim 67, wherein said means for attaching said transport layer to said end caps is a mechanical bond.

69. The filter system as recited in claim 68, wherein said mechanical bond is constriction bands biasing said transport layer to said outwardly facing circumferential surfaces of said end caps.

70. The filter system as recited in Claim 68, wherein said means for attaching said transport layer to said end caps further includes a chemical bond.

71. A method of making a tubular filter element comprising the steps of:
positioning a porous, cylindrical inner core within a filter medium;
attaching a lower end cap on an end of the filter element, said lower end cap including a projection having an outwardly facing circumferential surface;
attaching an upper end cap with an intake on the other end of the filter element, said upper end cap including a projection having an outwardly facing circumferential surface;
positioning a filter drainage sleeve exterior to said filter medium and said end caps; and
placing a constriction band around said drainage sleeve, said band biasing said drainage sleeve against said outwardly facing circumferential surface of said lower end cap.

72. The method of making a tubular filter element as recited in claim 71, further comprising the step of placing a second constriction band around said drainage sleeve, said second band biasing said drainage sleeve against said outwardly facing circumferential surface of said upper end cap.

73. A method of making a tubular filter element comprising the steps of:
positioning a porous, cylindrical inner core within a filter medium;
positioning a filter drainage sleeve exterior to said filter medium;
attaching a lower end cap on an end of the filter element, said lower end cap including a projection having an outwardly facing circumferential surface and an abutment surface located adjacent to an end of said drainage sleeve;
attaching an upper end cap with an intake on the other end of the filter element, said upper end cap including a projection having an outwardly facing circumferential surface and an abutment surface located adjacent to an end of said drainage sleeve;
positioning a transport layer exterior to said filter medium and said end caps; and
placing a constriction band around said transport layer, said band biasing said transport layer against said outwardly facing circumferential surface of said lower end cap.

74. The method of making a tubular filter element as recited in claim 73, further comprising the step of placing a second constriction band around said transport layer, said second band biasing said transport layer against said outwardly facing circumferential surface of said upper end cap.

75. A method of filtering a contaminated gas stream comprising the steps of:
passing a gas stream into a filter system enclosing a tubular filter element;
passing the gas stream into a porous cylindrical inner core of said filter element;
passing the gas stream through said pores into a filter medium;
separating out entrained contaminants from the gas stream;
coalescing said contaminants as said contaminants continue traveling outwardly and downwardly toward a lower end cap, said lower end cap positioned inward of said sleeve;
allowing migration of said coalesced contaminants outwardly and downwardly into an outwardly positioned filter drainage sleeve;
dripping said contaminants from said sleeve so as to not come into contact with said lower end cap, said contaminants dripping into said filtration vessel and out a drain positioned on a lower surface of said vessel; and
passing the gas stream out of said filter element and out of said filter system.

76. A method of filtering a contaminated gas stream comprising the steps of:
passing a gas stream into a filter system enclosing a tubular filter element;
passing the gas stream into a porous cylindrical inner core of said filter element;
passing the gas stream through said pores into a filter medium;
separating out entrained contaminants from the gas stream;
coalescing said contaminants as said contaminants continue traveling outwardly and downwardly toward a lower end cap, said lower end cap positioned inward of said sleeve;
allowing migration of said coalesced contaminants outwardly and downwardly into an outwardly positioned filter drainage sleeve;
allowing further migration of said coalesced contaminants outwardly and downwardly into an outwardly positioned transport layer;
dripping said contaminants from said transport layer so as to not come into contact with said lower end cap, said contaminants dripping into said filtration vessel and out a drain positioned on a lower surface of said vessel; and
passing the gas stream out of said filter element and out of said filter system.
